# EUROPÄISCHE PATENTSCHRIFT

(11) **EP 2 544 154 B1**
(45) Veröffentlichungstag und Bekanntmachung des Hinweises auf die Patenterteilung: **12.08.2015**
(21) Anmeldenummer: 12174466.8
(22) Anmeldetag: 29.06.2012
(51) Int. Cl.: G07C 9/00, B60R 25/00

(54) **Mobiler Identifikationsgeber, der in einen Normalzustand und in einen Sicherungszustand bringbar ist**
Mobile identifier which can be put in normal mode and security mode
Transmetteur d'identification mobile qui peut prendre un état normal et un état sécurisé

(30) Priorität: 05.07.2011 DE 102011051586
(43) Veröffentlichungstag der Anmeldung: 09.01.2013
(73) Patentinhaber: Huf Hülsbeck & Fürst GmbH & Co. KG, 42551 Velbert (DE)
(72) Erfinder: Geldmacher, Alexander, 42113 Wuppertal (DE)
(74) Vertreter: Vogel, Andreas

(56) Entgegenhaltungen:
- EP-A1- 2 412 586
- EP-A1- 2 450 242
- DE-A1-102008 037 717
- DE-A1-102009 057 060
- US-A1- 2003 146 821

## Beschreibung

Die Erfindung betrifft einen mobilen Identifikationsgeber für eine Aktivierung eines Sicherheitssystems eines Kraftfahrzeuges, insbesondere eines Zugangs- und/oder Fahrberechtigungssystems, mit einem Gehäuse, in dem eine Elektronik und ein Kommunikationsmittel angeordnet sind, wobei das Kommunikationsmittel mit einem kraftfahrzeugseitigen Kommunikationsmittel des Sicherheitssystems in Kommunikation bringbar ist.

Die DE 102009057060 A offenbart einen mobilen Identifikationsgeber mit einen lösbar befestigten Bezahlelement.

Es ist Aufgabe der vorliegenden Erfindung einen mobilen Identifikationsgeber für eine schlüssellose Aktivierung eines Sicherheitssystems eines Kraftfahrzeuges zu schaffen, der eine größere Funktionalität aufweist und einfach gestaltet ist, wobei gleichzeitig dem Benutzer ein komfortabler mobiler Identifikationsgeber bereitgestellt wird.

Zur Lösung dieser Aufgabe wird ein mobiler Identifikationsgeber mit sämtlichen Merkmalen des Anspruches 1 vorgeschlagen. In den abhängigen Ansprüchen sind bevorzugte Weiterbildungen ausgeführt.

Dazu ist erfindungsgemäß vorgesehen, dass ein Bezahlelement in einer Aufnahme des Gehäuses lösbar befestigt ist, ein Verschluss separat am Gehäuse angeordnet ist, der Identifikationsgeber in einen Normalzustand und in einen Sicherungszustand bringbar ist, in dem Normalzustand und in dem Sicherungszustand eine Kommunikation mit dem Sicherheitssystems ausführbar ist, in dem Sicherungszustand das Bezahlelement der Aufnahme entnommen ist und der Verschluss die Aufnahme abdichtend schützt.

Das Bezahlelement kann bei Bedarf aus dem Gehäuse des Identifikationsgebers vom Benutzer entnommen werden. Dies ist beispielsweise dann der Fall, wenn das Kraftfahrzeug mit dem Identifikationsgeber in einer Werkstatt abgegeben wird oder eine dritte Person den mobilen Identifikationsgeber erhält, um beispielsweise das Kraftfahrzeug einzuparken etc. Mit Hilfe des Bezahlelementes, welches in der Aufnahme des Gehäuses lösbar befestigt ist, kann der Benutzer diverse Bezahlaktionen ausführen, beispielsweise in einer Tankstelle, in einem Kaufhaus etc.. Während des Bezahlvorganges verbleibt vorzugsweise das Bezahlelement innerhalb des Gehäuses. Um die Gefahr auszuschließen, dass ein Unberechtigter mit Hilfe des mobilen Identifikationsgebers eine Bezahlfunktion ausführt, kann der berechtigte Benutzer zu jeder Zeit das Bezahlelement aus dem Gehäuse entnehmen, wobei sämtliche, weitere Funktionen des mobilen Identifikationsgebers, insbesondere zur schlüssellosen Aktivierung des Sicherheitssystems des Kraftfahrzeuges erhalten bleiben. Das bedeutet, dass sowohl im Normalzustand als auch in dem Sicherungszustand des mobilen Identifikationsgebers eine Kommunikation mit dem Sicherheitssystem ausführbar ist. Befindet sich der mobile Identifikationsgeber jedoch im Sicherungszustand, ist eine Bezahlaktion blockiert, da das Bezahlelement sich nicht mehr in der Aufnahme des Gehäuses des Identifikationsgebers befindet. Damit die Funktionalität des erfindungsgemäßen Identifikationsgebers sichergestellt ist, ist es notwendig, dass insbesondere im Sicherungszustand die Aufnahme, in der normalerweise das Bezahlelement sich befindet, wirkungsvoll abgedichtet ist. Falls nämlich Feuchtigkeit, Schmutzpartikel etc. von außen in die Aufnahme gelangen, hat es sich nachteiligerweise gezeigt, dass für den Normalzustand des Identifikationsgebers die elektrische Verbindung zwischen dem Bezahlelement und der innerhalb des Gehäuses integrierten Elektronik gestört werden kann, wodurch nachteiligerweise Bezahlaktionen über das Bezahlelement nicht mehr möglich sind. Der erfindungsgemäße Verschluss verhindert wirkungsvoll, dass etwaige Verbindungsstörungen zwischen dem Bezahlelement und der innenseitigen Elektronik des Identifikationsgebers und/oder dass etwaige Kommunikationsstörungen zwischen dem Bezahlelement und dem elektronischen Zahlungssystem entstehen. Zudem verhindert der abdichtende Verschluss, dass im Sicherungszustand des Identifikationsgebers Feuchtigkeit, Schmutzpartikel etc. in das Innere des Gehäuses eindringen kann, wodurch auch die Elektronik gestört werden würde, die für eine Kommunikation mit dem fahrzeugseitigen Sicherheitssystem verantwortlich ist.

In einer weiteren die Erfindung verbessernde Maßnahme kann im Normalzustand das Bezahlelement mit einem Zahlungssystem in Datenkommunikation bringbar sein, insbesondere dass das Bezahlelement eine Kreditkartenfunktion und/oder eine Debitkartenfunktion aufweist.

Das Bezahlelement kann einen Mikroprozessor aufweisen, wobei das Bezahlelement mit dem Zahlungssystem kommunizieren kann, insbesondere finanzbezogene Ferntransaktionen ausführen kann, wie z. B. einen bestimmten Geldbetrag auf das Bezahlelement neu zu laden oder einen definierten Betrag vom Bezahlelement abzubuchen. Zum Beispiel kann das Bezahlelement lediglich für kleine Beträge vorgesehen sein, nämlich als Bezahlmittel zum Bezahlen kleiner täglicher Kosten, wodurch auf diese Weise ein Einsatz für die Verwendung von bargeldlosem Kleingeld geboten wird. Zudem kann das Bezahlelement derart ausgestattet sein, dass Beträge ohne jegliche Begrenzung in Kommunikation mit dem Zahlungssystem transferierbar sind.

Vorteilhafterweise ist das Bezahlelement mit einem Speicher ausgeführt, wobei das Bezahlelement in einer weiteren Ausführungsform der Erfindung mit einer integrierten Schaltung ausgebildet sein kann, die einen oder mehrere Mikroprozessoren aufweisen kann. Hierbei spielen der Mikroprozessor und sein Speicher in einer möglichen Ausführungsform der Erfindung eine wichtige Rolle im Hinblick auf die Sicherheit, weil die Speicher z. B. Codes für die Autorisierung, für die Steuerung, für neue Saldenwerte beinhalten können. In einer möglichen Ausgestaltung der Erfindung kann der Mikroprozessor in der Lage sein, einen komplexen Berechnungsalgorithmus auszuführen oder einen geheimen Wert aus Identifikationsdaten, die in ihn eingegeben werden, zu überprüfen.

Nachdem dieses Bezahlelement in Datenkommunikation mit dem elektronischen Zahlungssystem gebracht worden ist, kann es in einer möglichen Ausführungsform der Erfindung vorgesehen sein, dass das Bezahlelement dann funktionslos bleibt, wenn der berechnete geheime Code nicht äquivalent einem bereits in der Karte befindlichen geheimen Code ist.

Im Normalzustand des mobilen Identifikationsgebers liegt das Bezahlelement, insbesondere mit seinem eigenen bezahlelementseitigen Kontaktelementen an den aufnahmeseitigen Kontaktelementen unmittelbar an. Zudem ist vorgesehen, dass das Bezahlelement als solches ebenfalls zuverlässig eine abdichtende Funktion aufweist, so dass im Normalzustand des Identifikationsgebers ebenfalls keine Feuchtigkeit, Schmutzpartikel etc. in die Aufnahme und/oder in das Gehäuse gelangen kann. Die Kontaktelemente in der Aufnahme werden über den Verschluss im Sicherungszustand des Identifikationsgebers sowie über das Bezahlelement im Normalzustand des Identifikationsgebers abdichtend geschützt.

Ebenfalls kann vorgesehen sein, dass ein Träger vorgesehen ist, in dem das Bezahlelement integriert ist, wobei der Träger in der Aufnahme lösbar befestigt ist. Im Normalzustand des Identifikationsgebers ist der Träger in der Aufnahme des Gehäuses eingesetzt, wobei der Träger für den Benutzer zumindest bereichsweise ein Bestandteil des Gehäuses darstellen kann. Vorteilhafterweise ist der Träger der Geometrie der Aufnahme des Gehäuses entsprechend angepasst, so dass der Träger zuverlässig in der Aufnahme des Gehäuses gehalten ist. Der Träger kann zum Beispiel form- und/oder kraftschlüssig am Gehäuse, insbesondere an der Aufnahme des Gehäuses befestigt sein.

Vorteilhafterweise kann der Verschluss beweglich am Gehäuse gelagert sein und zwischen einer aktiven Lage und einer passiven Lage bewegbar sein, wobei in der aktiven Lage der Identifikationsgeber im Sicherungszustand sich befindet. In der passiven Lage des Verschlusses befindet sich das Bezahlelement in der Aufnahme des Gehäuses, damit Bezahlaktionen durch den Benutzer auslösbar sind.

Ferner ist denkbar, dass über eine entsprechende, bewusste Aktivierung am Identifikationsgeber, insbesondere an einem Aktivierungselement der Benutzer bewirken kann, dass das Bezahlelement und/oder der Träger aus der Aufnahme des Gehäuses gelöst werden kann. Das bedeutet, dass im Normalzustand des Identifikationsgebers das Bezahlelement in der Aufnahme des Gehäuses sich befindet und dort derart gesichert ist, dass eine Entnahme aus der Aufnahme blockiert ist. Dieses kann beispielsweise über Rastelemente erfolgen, die unmittelbar am Bezahlelement und/oder am Träger wirken. Erst, wenn der Benutzer bewusst eine Aktivierung am Identifikationsgeber auslöst, wird die Blockierung des Bezahlelementes und/oder des Trägers in der Aufnahme aufgehoben, so dass der Benutzer das Bezahlelement aus der Aufnahme entnehmen kann.

Ebenfalls ist denkbar, dass ein Energiespeicher vorgesehen ist, der die Elektronik und/oder das Bezahlelement mit Strom versorgt. Somit kann lediglich ein Energiespeicher im Identifikationsgeber vorgesehen sein, der die Elektronik innerhalb des Gehäuses mit Strom versorgt sowie dafür sorgt, dass eine Bezahlaktion über das Bezahlelement möglich ist. Ebenfalls kann ein zweiter Energiespeicher als Redundanz im mobilen Identifikationsgeber enthalten sein. Ferner kann der eine Energiespeicher ebenfalls den weiteren Energiespeicher wieder aufladen, falls eine Energieentladung bzw. ein Energieverbrauch stattgefunden hat. Der erste und/oder der zweite Energiespeicher kann als Batterie, Akkumulator, magnetischer Energiespeicher oder als Kondensator ausgeführt sein.

Ferner kann vorgesehen sein, dass der Verschluss als Blindstecker ausgeführt ist, der insbesondere an einem Seil des Gehäuses befestigt ist. Hierbei kann das Seil flexibel und/oder elastisch sein, wobei das Seil als Sicherheitselement wirkt, damit der Verschluss nicht sich vom Identifikationsgeber löst und somit verlorengeht. Der Vorteil den Verschluss als Blindstecker auszubilden ist, dass über die Steckerfunktion ein zuverlässiger Halt in der Aufnahme gewährleistet ist, wobei die Aufnahme über entsprechende Befestigungsmittel verfügt, an denen der Blindstecker eingreifen kann.

Ebenfalls ist es denkbar, dass der Träger und/oder das Bezahlelement ein eigenes Kommunikationsmittel für die Kommunikation mit dem Zahlungssystem aufweist. Das bedeutet, dass zur schlüssellosen Aktivierung des Sicherheitssystems des Kraftfahrzeuges ein unabhängiges, zweites Kommunikationsmittel am Identifikationsgeber genutzt wird, welches sich am Träger und/oder am Bezahlelement befindet.

Ebenfalls kann das Kommunikationsmittel des Identifikationsgebers gleichzeitig zur Kommunikation mit dem Zahlungssystem dienen.

Besonders vorteilhaft ist es, dass mit Hilfe des herausnehmbaren Bezahlelementes ein bargeldloser Zahlungsverkehr am Bezahlpunkt (point of sale, POS) stattfinden kann, wobei ein elektronisches Lastschriftverfahren ausgeführt werden kann, welches beispielsweise in einem Online-Verfahren oder in einem Offline-Verfahren stattfinden kann. Bei dem Online-Verfahren steht das elektronische Zahlungssystem mit oder ohne Unterstützung eines Computers mit einem Kartenbetreiber, beispielsweise Maestro, VISA etc. in Verbindung. Dabei wird das Bezahlelement mit Hilfe von Nummern und PIN auf Missbrauch geprüft und kann sodann die Belastung des Kundenkontos durch eine entsprechende Transaktion zwischen dem Kartenbetreiber und der Kundenbank veranlassen. Ebenfalls ist es denkbar, dass das elektronische Lastschriftverfahren im Offline-Verfahren betrieben wird, wobei bei der Bezahlaktion lediglich die Kontendaten genutzt werden. Zum Zwecke der Abbuchungserlaubnis, insbesondere des Einzugsverfahrens lässt sich der Verkäufer, Händler etc. eine Abbuchungserlaubnis auf der Rechnung vom Kunden, der den erfindungsgemäßen Identifikationsgeber bei sich trägt, per Unterschrift quittieren.

Um die Kommunikationssicherheit zwischen dem Bezahlelement und dem Zahlungssystem zu erhöhen, hat vorteilhafterweise das Kommunikationsmittel des Bezahlelementes eine Reichweite von weniger als 20 cm, insbesondere weniger als 10 cm. Vorteilhafterweise kommunizieren das Bezahlelement und das elektrische Zahlungssystem kryptographisch miteinander. Ebenfalls kann vorgesehen sein, dass das Kommunikationsmittel des Bezahlelementes in einem Frequenzbereich von ca. 13,56 MHz arbeitet, wobei insbesondere Datenübertragungsraten von mehr als 400 kBit pro Sekunde erzielbar sind. Die Kommunikation zwischen dem Bezahlelement und dem Zahlungssystem kann über Bluetooth oder über eine Near Field Communication-Technik ausgeführt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Es zeigen:
- Fig. 1: eine rein schematische Darstellung eines mobilen Identifikationsgebers mit einem Bezahlelement, das sich in einer Aufnahme des Gehäuses des Identifikationsgebers befindet,
- Fig. 2: den Identifikationsgeber gemäß Figur 1, wobei das Bezahlelement aus der Aufnahme des Gehäuses entnommen ist,
- Fig. 3: eine weitere Variante eines mobilen Identifikationsgebers gemäß Figur 1,
- Fig. 4: eine vergrößerte Ansicht der Aufnahme des Gehäuses gemäß Figur 1 in einer weiteren Ausführungsvariante und
- Fig. 5: ein weiteres Ausführungsbeispiel einer Aufnahme des Gehäuses aus Figur 1.

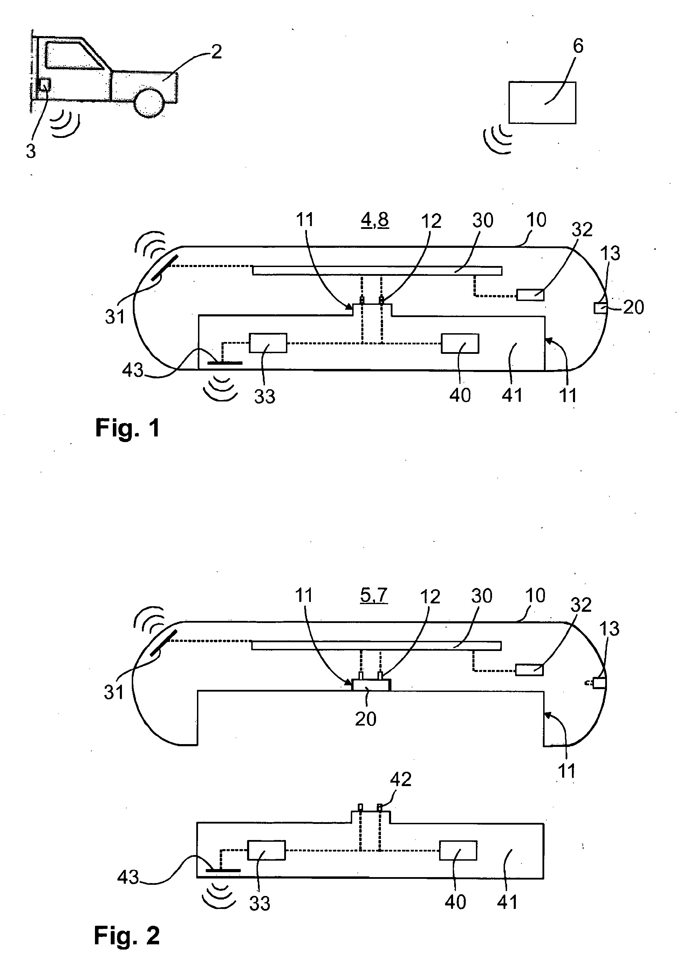

In Figur 1 und Figur 2 ist ein mobiler Identifikationsgeber 1 dargestellt, der zur Aktivierung eines Sicherheitssystems eines Kraftfahrzeuges 2 dient. Zudem offenbart dieses Ausführungsbeispiel ein System, bei dem ein Bezahlelement 40, welches innerhalb des mobilen Identifikationsgebers 1 angeordnet ist, in Datenkommunikation mit einem elektronischen Zahlungssystem 6 bringbar ist. Zudem umfasst der mobile Identifikationsgeber 1 eine Elektronik 30, in der gespeicherte Identifikationsdaten enthalten sein können. Zudem weist das Kraftfahrzeug 2 Kommunikationsmittel 3 auf, die als Sende- und/oder Empfangseinheit ausgeführt sein können. Auch der mobile Identifikationsgeber 1 weist ein Kommunikationsmittel 31 auf, das mit dem kraftfahrzeugseitigen Kommunikationsmittel 3 kommunizieren kann. Das Sicherheitssystem des Kraftfahrzeuges 2 wird erst dann aktiviert, um einen Entriegelungsvorgang oder Verriegelungsvorgang der Kraftfahrzeugtür vorzunehmen, wenn nach der Kommunikation zwischen den genannten Kommunikationsmitteln 3, 31 eine positive Authentifikation festgestellt wurde. Das bedeutet, dass der einen gültigen Identifikationsgeber 1 mitführende Benutzer sein Kraftfahrzeug 2 beispielsweise öffnen kann.

Das Gehäuse 10 des mobilen Identifikationsgebers 1 ist mit einer Aufnahme 11 ausgeführt, in der das Bezahlelement 40 eingesetzt ist. Im vorliegenden Ausführungsbeispiel ist ein Träger 41 vorgesehen, in dem das Bezahlelement 40 integriert ist. Der Träger 41 ist der geometrischen Form der Aufnahme 11 des Gehäuses 10 entsprechend angepasst. Im eingesetzten Zustand des Trägers 41 in der Aufnahme 11 gemäß Figur 1 übernimmt der Träger 41 eine gewisse Gehäusefunktion. Zudem kann die Aufnahme 11 auf diverse Art geometrisch ausgestaltet sein, um zuverlässig den Träger 41 mit dem Bezahlelement 40 am Gehäuse 10 des Identifikationsgebers 1 zu halten. In sämtlichen Ausführungsbeispielen ist das Bezahlelement 40 jedoch derart mit dem Träger 41 in der Aufnahme 11 eingesetzt, dass der Benutzer bei Bedarf das Bezahlelement 40 aus der Aufnahme 11 entnehmen kann. Gemäß Figur 1 ist es denkbar, dass für die Kommunikation mit dem elektronischen Zahlungssystem 6 ebenfalls das Kommunikationsmittel 31 verwendet wird, das auch für die Kommunikation mit dem kraftfahrzeugseitigen Kommunikationsmittel 3 eingesetzt wird. Alternativ ist es möglich, dass für die Kommunikation mit dem elektronischen Zahlungssystem 6 ein zweites Kommunikationsmittel 43 im mobilen Identifikationsgeber 1 vorgesehen ist. Hierbei kann das Kommunikationsmittel 43 beispielsweise am Gehäuse 10 des mobilen Identifikationsgebers 1 angeordnet sein. Ebenfalls ist es denkbar, dass das Bezahlelement 40 eigens mit diesem Kommunikationsmittel 43 ausgeführt ist. Ebenfalls ist es denkbar, dass der Träger 41 das Kommunikationsmittel 43 aufweist.

Das Bezahlelement 40 kann in einem weiteren, nicht explizit dargestellten Ausführungsbeispiel eigenständig in der Aufnahme 11 des Gehäuses 10 lösbar befestigt sein. Das bedeutet, dass das Bezahlelement 40 ohne einen Träger gemäß Figur 1 oder Figur 2 am Gehäuse 10 angeordnet sein kann. Beispielsweise ist ein Schlitz, ein Fenster, eine Öffnung etc. entsprechend der Geometrie des Bezahlelementes 40 am Gehäuse 10 ausgeführt, um zuverlässig das Bezahlelement 40 aufzunehmen. Wenn nun der Benutzer das Bezahlelement 40 aus dem Gehäuse 10 entnimmt, ist ferner ein entsprechender Verschluss vorgesehen, der separat am Gehäuse angeordnet ist, um die Aufnahme des Bezahlelementes 40 wieder zuverlässig zu verschließen.

Das Bezahlelement 40 kann z.B. einen Chip, einschließlich eines Mikroprozessors, Schaltung, Speichereinheit etc. aufweisen, um Bezahlaktionen mit dem Zahlungssystem 6 auszuführen, welches beispielsweise in Figur 1 und in Figur 2 schematisch gezeigt ist. Das Zahlungssystem 6 kann z.B. an einem Bezahlpunkt (POS) positioniert sein, wobei ein bargeldloser Zahlungsverkehr zwischen dem Käufer, der beispielsweise den mobilen Identifikationsgeber 1 bei sich trägt, und einen Verkäufer und/oder einem Kreditinstitut zu gewährleisten. Hierbei kann das Bezahlelement 40 beispielsweise eine Kreditkartenfunktion und/oder eine Debitkartenfunktion aufweisen. In Figur 1 ist das Bezahlelement 40 mit dem Träger 41 in der Aufnahme 11 des Gehäuses 10 gehalten, so dass der Identifikationsgeber 1 seinen Normalzustand aufweist, bei dem eine Kommunikation mit dem Sicherheitssystem des Kraftfahrzeuges 2 als auch eine Kommunikation mit dem Zahlungssystem 6 möglich ist. In Figur 2 ist der Sicherungszustand 5 gezeigt, bei dem ein Verschluss 20 in der Aufnahme 11 befestigt ist, damit störungsempfindliche Bauteile, wie z.B. Kontaktelemente 12 der Aufnahme 11 geschützt werden, wodurch Funktionsstörungen vermieden werden können. In diesem Sicherungszustand 5 ist eine Kommunikation des Identifikationsgebers 1 mit dem Sicherheitssystem des Kraftfahrzeuges möglich, jedoch kann eine Bezahlaktion über das Bezahlelement 40, welches der Aufnahme 11 entnommen ist, nicht erfolgen.

Zudem ist es denkbar, dass ein Energiespeicher 32 am Identifikationsgeber 1 vorgesehen ist, um die notwendigen elektronischen Bauteile mit Strom zu versorgen. Figur 1 zeigt beispielsweise, dass der Energiespeicher 32 im Gehäuse 11 integriert sein kann, um die Elektronik 30, einschließlich Kommunikationsmittel 3, 43, 31 mit Strom zu versorgen. Ebenfalls ist es möglich, dass ein zweiter Energiespeicher 33 vorgesehen ist, der direkt im Bezahlelement 40 integriert ist oder im Träger 41 integriert ist. Dieser zweite Energiespeicher 33 dient als Redundanz für den ersten Energiespeicher 32.

Wie in Figur 1 und in Figur 2 gezeigt ist, ist der Verschluss 20 in einer Ausnehmung 13 des Gehäuses 10 eingesetzt und befindet sich erfindungsgemäß in einer passiven Lage 8. In Figur 2 ist die aktive Lage 7 des Verschlusses 20 gezeigt, in der der Verschluss 20 in der Aufnahme 11 befestigt ist.

Der Verschluss 20 kann als Blindstecker ausgeführt sein, der mit entsprechenden Kontaktelementen ausgeführt ist, die in die Kontaktelemente 12 des Gehäuses 10 gesteckt werden können, wodurch dieser Blindstecker 20 zuverlässig in der Aufnahme 11 gehalten ist und eine zuverlässige Abdichtung der Aufnahme 11 darstellt.

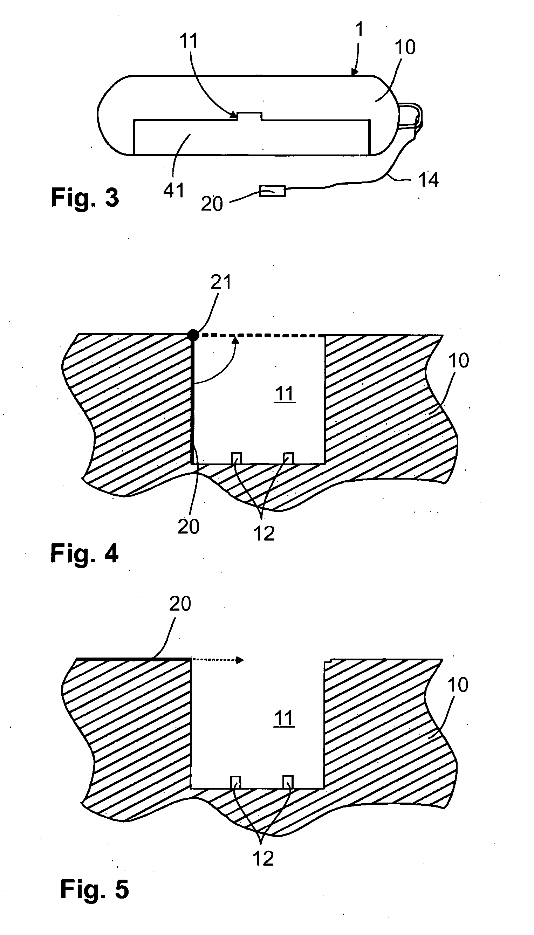

In Figur 3 ist ein weiteres Ausführungsbeispiel des erfindungsgemäßen Identifikationsgebers 1 gemäß Figur 1 und Figur 2 gezeigt, wobei der Verschluss 20 am Gehäuse 10 über ein Seil 14 befestigt ist. Das Seil 14 kann beispielsweise flexibel ausgeführt sein. Die restlichen Ausführungen des Identifikationsgebers 1 gemäß Figur 1 und Figur 2 lassen sich ohne Weiteres auf den Identifikationsgeber 1 gemäß Figur 3 beziehen.

In Figur 4 oder Figur 5 ist die Aufnahme 11 gezeigt, wobei in Figur 4 der Verschluss 20 eine um eine Achse 21 schwenkbare Klappe ist, die in der passiven Lage 8 federbelastet ist. Wenn nun gemäß Figur 4 das Bezahlelement aus der Aufnahme 11 entnommen wird, verschwenkt sich gleichzeitig der Verschluss 20 gegen den Uhrzeigersinn um die Achse 21 und erreicht seine aktive Lage 7, die in gestrichelter Form in Figur 4 gezeigt ist. Die in der Aufnahme 11 sich befindenden Kontaktelemente 12 können somit wirksam vom Außenbereich abdichtend geschützt werden.

In Figur 5 lässt sich der Verschluss 20 translatorisch zwischen seiner aktiven Lage 7 und seiner passiven Lage 8 bewegen. Wenn nun das Bezahlelement 40 aus der Aufnahme 11 des Gehäuses 10 entnommen wird, kann der Verschluss 20 zum einen manuell in die aktive Lage 7 (gestrichelt gezeigt) verschoben werden. Oder diese Bewegung des Verschlusses 20 in seine aktive Lage 7 erfolgt automatisch. Dieses Ausführungsbeispiel zeichnet sich besonders durch seine Kompaktheit aus, wobei gleichzeitig in der aktiven Lage 7 des Verschlusses 20 zuverlässig die Kontaktelemente 12 in der Aufnahme 11 abdichtend geschützt sind.

Gemäß aller Ausführungsbeispiele kann am Verschluss 20 und/oder am Träger 41 und/oder an der Wandung der Aufnahme 11 eine entsprechende Dichtung vorgesehen sein, um die Kontaktelemente 12, 42 sowie auch die Elektronik 30 mit ihren daran angeschlossenen elektronischen Bauteilen wirkungsvoll abdichten zu können. Dies gilt sowohl für den Normalzustand 4 als auch für den Sicherungszustand 5 des Identifikationsgebers 1. Zudem ist in sämtlichen Ausführungsbeispielen mit umfasst, dass der Verschluss 20 als Werbefläche, Informationsträger dienen kann, an dem Informationen, insbesondere ein Logo, Buchstaben, Zahlenkombinationen, Werbeinformationen angebracht, insbesondere aufgedruckt sein können.

### Bezugszeichenliste

- 1: mobiler Identifikationsgeber
- 2: Kraftfahrzeug
- 3: Kommunikationsmittel des Kraftfahrzeuges
- 4: Normalzustand
- 5: Sicherungszustand
- 6: Zahlungssystem
- 7: aktive Lage des Verschlusses
- 8: passive Lage des Verschlusses

- 10: Gehäuse
- 11: Aufnahme
- 12: Kontaktelement
- 13: Ausnehmung
- 14: Seil

- 20: Verschluss
- 21: Achse

- 30: Elektronik
- 31: Kommunikationsmittel
- 32: Energiespeicher, Batterie
- 33: zweiter Energiespeicher

- 40: Bezahlelement
- 41: Träger
- 42: Kontaktelement
- 43: Kommunikationsmittel

## Patentansprüche

1. Mobiler Identifikationsgeber (1) für eine Aktivierung eines Sicherheitssystems eines Kraftfahrzeuges (2), insbesondere eines Zugangs- und/oder Fahrberechtigungssystems, mit
einem Gehäuse (10), in dem eine Elektronik (30) und ein Kommunikationsmittel (31) angeordnet sind, wobei das Kommunikationsmittel (31) mit einem kraftfahrzeugseitigen Kommunikationsmittel (3) des Sicherheitssystems in Kommunikation bringbar ist, wobei
ein Bezahlelement (40) in einer Aufnahme (11) des Gehäuses (10) lösbar befestigt ist,
ein Verschluss (20) separat am Gehäuse (10) angeordnet ist,
der Identifikationsgeber (1) in einen Normalzustand (4) und in einen Sicherungszustand (5) bringbar ist,
in dem Normalzustand (4) und in dem Sicherungszustand (5) eine Kommunikation mit dem Sicherheitssystem ausführbar ist, und
in dem Sicherungszustand (5) das Bezahlelement (40) der Aufnahme (11) entnommen ist und der Verschluss (20) die Aufnahme (11) abdichtend schützt, wobei die Aufnahme (11) Kontaktelemente (12) aufweist, mit denen das Bezahlelement (40) im Normalzustand (4) kontaktierend verbunden ist, wobei im Sicherungszustand (5) der Verschluss (20) die Kontaktelemente (12) vom Außenbereich schützt,
und im Normalzustand (4) das Bezahlelement (40) die Kontaktelemente (12) abdichtend schützt oder ein Träger (41) vorgesehen ist, um die Kontaktelemente (12) abzudichten, wobei in dem Träger (41) das Bezahlelement (40) integriert ist.

2. Mobiler Identifikationsgeber (1) nach Anspruch 1,
**dadurch gekennzeichnet,**
**dass** im Normalzustand (4) das Bezahlelement (40) mit einem Zahlungssystem (6) in Datenkommunikation bringbar ist, insbesondere dass das Bezahlelement (40) eine Kreditkartenfunktion und/oder eine Debitkartenfunktion aufweist.

3. Mobiler Identifikationsgeber (1) nach einem der vorhergehenden Ansprüche,
**dadurch gekennzeichnet,**
**dass** ein Träger (41) vorgesehen ist, in dem das Bezahlelement (40) integriert ist, wobei der Träger (41) in der Aufnahme (11) lösbar befestigt ist.

4. Mobiler Identifikationsgeber (1) nach einem der vorhergehenden Ansprüche,
**dadurch gekennzeichnet,**
**dass** der Verschluss (20) beweglich am Gehäuse (10) gelagert ist und zwischen einer aktiven Lage (7) und einer passiven Lage (8) bewegbar ist, wobei in der aktiven Lage (7) der Identifikationsgeber (1) im Sicherungszustand (5) sich befindet.

5. Mobiler Identifikationsgeber (1) nach einem der vorhergehenden Ansprüche,
**dadurch gekennzeichnet,**
**dass** ein Energiespeicher (32) vorgesehen ist, der die Elektronik (30) und/oder das Bezahlelement (40) mit Strom versorgt.

6. Mobiler Identifikationsgeber (1) nach einem der vorhergehenden Ansprüche,
**dadurch gekennzeichnet,**
**dass** ein zweiter Energiespeicher (33) vorgesehen ist, der insbesondere im Träger (41) integriert ist.

7. Mobiler Identifikationsgeber (1) nach einem der vorhergehenden Ansprüche,
**dadurch gekennzeichnet,**
**dass** der Verschluss (20) als Blindstecker ausgeführt ist, der insbesondere an einem Seil (14) des Gehäuses (10) befestigt ist.

8. Mobiler Identifikationsgeber (1) nach einem der vorhergehenden Ansprüche,
**dadurch gekennzeichnet,**
**dass** der Träger (41) und/oder das Bezahlelement (40) ein eigenes Kommunikationsmittel (43) für die Kommunikation mit dem Zahlungssystem (6) aufweist.

9. Mobiler Identifikationsgeber (1) nach einem der vorhergehenden Ansprüche,
**dadurch gekennzeichnet,**
**dass** das Kommunikationsmittel (31) des Identifikationsgebers (1) gleichzeitig zur Kommunikation mit dem Zahlungssystem (6) dient.

10. Mobiler Identifikationsgeber (1) nach einem der vorhergehenden Ansprüche,
**dadurch gekennzeichnet,**
**dass** eine Blockiervorrichtung vorgesehen ist, die das Bezahlelement (40) im Normalzustand (4) des Identifikationsgebers (1) in der Aufnahme (11) des Gehäuses (10) arretierend hält.

11. Mobiler Identifikationsgeber (1) nach einem der vorhergehenden Ansprüche,
**dadurch gekennzeichnet,**
**dass** eine Arretiervorrichtung vorgesehen ist, die im Sicherungszustand (5) des Identifikationsgebers (1) den Verschluss (20) in der Aufnahme (11) arretierend hält.

12. Mobiler Identifikationsgeber (1) nach einem der vorhergehenden Ansprüche,
**dadurch gekennzeichnet,**
**dass** am Verschluss (20) Informationen angeordnet sind.

## Claims

1. A mobile identification device (1) for activating a security system of a motor vehicle (2), in particular an access and/or driving authorisation system, with
a housing (10) in which an electronics (30) and a communication means (31) are arranged, wherein the communication means (31) can be brought into communication with a vehicle communication means (3) of the security system, wherein
a paying element (40) is releasably fastened in a holder (11) of the housing (10),
a closure (20) is separately arranged on the housing (10),
the identification device (1) can be put into a normal mode (4) and into a security mode (5),
a communication with the security system is achievable in normal mode (4) and in security mode (5), and
in security mode (5) the paying element (40) is removed from the holder (11) and the closure (20) sealingly protects the holder (11), wherein the holder (11) comprises contact elements (12), with which the paying element (40) is contactingly connected in normal mode (4), wherein in security mode (5) the closure (20) protects the contact elements (12) against the outside area,
and in normal mode (4) the paying element (40) sealingly protects the contact elements (12) or a carrier (41) is provided for sealing the contact elements (12), wherein the paying element (40) is integrated with the carrier (41).

2. The mobile identification device (1) according to claim 1, **characterised in that**
in normal mode (4) the paying element (40) can be brought into data communication with a payment system (6), in particular **in that** the paying element (40) comprises a credit card function and/or a debit card function.

3. The mobile identification device (1) according to one of the preceding claims, **characterised in that** a carrier (41) is provided, in which the paying element (40) is integrated, wherein the carrier (41) is releasably fastened in the holder (11).

4. The mobile identification device (1) according to one of the preceding claims, **characterised in that** the closure (20) is movably mounted on the housing (10) and can be moved between an active position (7) and a passive position (8), wherein the identification device (1), when in the active position (7), is in security mode (5).

5. The mobile identification device (1) according to one of the preceding claims, **characterised in that** an energy store (32) is provided, which supplies the electronics (30) and/or the paying element (40) with power.

6. The mobile identification device (1) according to one of the preceding claims, **characterised in that** a second energy store (33) is provided, which in particular is integrated with the carrier (41).

7. The mobile identification device (1) according to one of the preceding claims, **characterised in that** the closure (20) is configured as a dummy plug, which in particular is attached to a rope (14) of the housing (10).

8. The mobile identification device (1) according to one of the preceding claims, **characterised in that** the carrier (41) and/or the paying element (40) comprises its own communication means (43) for communicating with the payment system (6).

9. The mobile identification device (1) according to one of the preceding claims, **characterised in that** the communication means (31) of the identification device (1) is simultaneously used for communicating with the payment system (6).

10. The mobile identification device (1) according to one of the preceding claims, **characterised in that** a blocking device is provided which lockingly retains the paying element (40) in the holder (11) of the housing (10), when the identification device (1) is in normal mode (4).

11. The mobile identification device (1) according to one of the preceding claims, **characterised in that** a retaining device is provided which lockingly retains the closure (20) in the holder (11), when the identification device (1) is in security mode (5).

12. The mobile identification device (1) according to one of the preceding claims, **characterised in that** information is arranged on the closure (20).

## Revendications

1. Emetteur mobile d'identification (1) dévolu à l'activation d'un système de sûreté d'un véhicule automobile (2), en particulier d'un système d'autorisation d'accès et/ou de déplacement, comprenant
un boîtier (10) dans lequel sont disposés une unité électronique (30) et un moyen de communication (31), ledit moyen de communication (31) pouvant être mis en communication avec un moyen de communication (3) dudit système de sûreté, situé côté véhicule automobile, sachant
qu'un élément de paiement (40) est fixé, de manière amovible, dans un logement (11) du boîtier (10),
qu'un obturateur (20) est implanté distinctement sur ledit boîtier (10),
que ledit émetteur d'identification (1) peut être amené à un état normal (4) et à un état sécurisé (5),
qu'une communication avec le système de sûreté peut être établie à l'état normal (4) et à l'état sécurisé (5), et sachant
qu'à l'état sécurisé (5), l'élément de paiement (40) est enlevé du logement (11) et l'obturateur (20) protège ledit logement (11) avec effet d'étanchement, ledit logement (11) étant muni d'éléments de contact (12) avec lesquels, à l'état normal (4), ledit élément de paiement (40) est en liaison établissant un contact, ledit obturateur (20) protégeant lesdits éléments de contact (12) vis-à-vis de la zone extérieure, à l'état sécurisé (5),
et qu'à l'état normal (4), ledit élément de paiement (40) protège lesdits éléments de contact (12) avec effet d'étanchement, ou bien un support (41) est prévu pour assurer l'étanchéité desdits éléments de contact (12), ledit élément de paiement (40) étant alors intégré dans ledit support (41).

2. Emetteur mobile d'identification (1) selon la revendication 1,
**caractérisé par le fait**
**qu'**à l'état normal (4), l'élément de paiement (40) est en communication d'échange de données avec un système de paiement (6) ; notamment par le fait que ledit élément de paiement (40) exerce une fonction de carte de crédit et/ou une fonction de carte de débit.

3. Emetteur mobile d'identification (1) selon l'une des revendications précédentes,
**caractérisé par**
la présence d'un support (41) dans lequel l'élément de paiement (40) est intégré, ledit support (41) étant fixé dans le logement (11) de manière amovible.

4. Emetteur mobile d'identification (1) selon l'une des revendications précédentes,
**caractérisé par le fait**
**que** l'obturateur (20) est monté de façon mobile sur le boîtier (10) et peut être mû entre une position active (7) et une position passive (8), ledit émetteur d'identification (1) se trouvant à l'état sécurisé (5) dans ladite position active (7).

5. Emetteur mobile d'identification (1) selon l'une des revendications précédentes,
**caractérisé par**
la présence d'un accumulateur d'énergie (32), qui alimente en courant l'unité électronique (30) et/ou l'élément de paiement (40).

6. Emetteur mobile d'identification (1) selon l'une des revendications précédentes,
**caractérisé par**
la présence d'un second accumulateur d'énergie (33), notamment intégré dans le support (41).

7. Emetteur mobile d'identification (1) selon l'une des revendications précédentes,
**caractérisé par le fait**
**que** l'obturateur (20) est réalisé sous la forme d'une fiche isolante fixée, en particulier, à un câble (14) du boîtier (10).

8. Emetteur mobile d'identification (1) selon l'une des revendications précédentes,
**caractérisé par le fait**
**que** le support (41) et/ou l'élément de paiement (40) comporte(nt) un propre moyen de communication (43), en vue de la communication avec le système de paiement (6).

9. Emetteur mobile d'identification (1) selon l'une des revendications précédentes,
**caractérisé par le fait**
**que** le moyen de communication (31) dudit émetteur d'identification (1) sert, simultanément, à la communication avec le système de paiement (6).

10. Emetteur mobile d'identification (1) selon l'une des revendications précédentes,
**caractérisé par**
la présence d'un dispositif de blocage qui maintient l'élément de paiement (40) dans le logement du boîtier (10), avec effet d'arrêt, à l'état normal (4) dudit émetteur d'identification (1).

11. Emetteur mobile d'identification (1) selon l'une des revendications précédentes,
**caractérisé par**
la présence d'un dispositif d'arrêt qui maintient l'obturateur (20) dans le logement (11), avec effet d'arrêt, à l'état sécurisé (5) dudit émetteur d'identification (1).

12. Emetteur mobile d'identification (1) selon l'une des revendications précédentes,
**caractérisé par le fait**
**que** l'obturateur (20) est porteur d'informations.
